# EUROPÄISCHE PATENTSCHRIFT

(11) **EP 2 513 447 B1**
(45) Veröffentlichungstag und Bekanntmachung des Hinweises auf die Patenterteilung: **20.05.2015**
(21) Anmeldenummer: 10800704.8
(22) Anmeldetag: 16.12.2010
(51) Int. Cl.: F01P 11/20, F28D 11/00, F28D 15/00, F28D 20/02

(54) **VORWÄRMUNG EINER BRENNKRAFTMASCHINE**
PREHEATING OF AN INTERNAL COMBUSTION ENGINE
PRÉCHAUFFAGE D'UN MOTEUR À COMBUSTION INTERNE

(30) Priorität: 18.12.2009 DE 102009059090
(43) Veröffentlichungstag der Anmeldung: 24.10.2012
(73) Patentinhaber: Bombardier Transportation GmbH, 10785 Berlin (DE)
(72) Erfinder: GERADTS, Karlheinz, CH-5603 Staufen AG (CH)
(74) Vertreter: Brunotte, Joachim Wilhelm Eberhard
(86) Internationale Anmeldenummer: PCT/EP2010/007807
(87) Internationale Veröffentlichungsnummer: WO 2011/072880

(56) Entgegenhaltungen:
- EP-A1- 1 861 595
- JP-A- 2007 309 570
- JP-A- 2010 144 574
- JP-A- 2010 175 048

## Beschreibung

Die Erfindung betrifft eine Anordnung mit einem Kühlmittelkreislauf für eine Brennkraftmaschine, wobei die Brennkraftmaschine thermisch mit mindestens einem Kühlmittelkreislauf koppelbar ist. Die Brennkraftmaschine kann insbesondere der Antriebsmotor eines Fahrzeuges, z. B. eines Schienenfahrzeug sein. In diesem Fall erzeugt die Brennkraftmaschine eine Traktion des Fahrzeuges. Die Brennkraftmaschine ist thermisch mit mindestens einem Kühlmittelkreislauf gekoppelt, der wiederum über zumindest einen Wärmetauscher thermisch mit einem Latentwärmespeicher gekoppelt oder zumindest zeitweise koppelbar ist. Die Erfindung betrifft insbesondere das Gebiet der Schienenfahrzeuge, bei denen typischerweise sehr viel leistungsstärkere Brennkraftmaschinen zum Einsatz kommen als bei Straßenkraftfahrzeugen. Bei dem Schienenfahrzeug kann es sich insbesondere um eine Lokomotive handeln, z.B. um eine dieselelektrisch angetriebene Lokomotive. Denkbar ist der Einsatz der Vorwärmung aber auch bei anderen Fahrzeugen, z.B. Schiffen. Ferner betrifft die Erfindung ein Verfahren zum Vorwärmen der Brennkraftmaschine.

Zur Vermeidung eines Kaltstarts einer Brennkraftmaschine ist es üblich, die Maschine über den Kühlmittelkreislauf der Maschine vorzuwärmen. Hierzu werden Vorwärmgeräte verwendet, die meist durch Verbrennung des gleichen Kraftstoffes, der auch beim Betrieb der Brennkraftmaschine verbrannt wird, Wärme erzeugen und das Kühlmittel in dem Kühlmittelkreislauf erwärmen. Durch Zirkulation des erwärmten Kühlmittels gelangt die Wärme zu der Brennkraftmaschine. Die Verwendung von Vorwärmgeräten führt zu einem zusätzlichen Verbrauch von Treibstoff und zusätzlichen Abgas-Emissionen.

Eine weitere Möglichkeit der Vorwärmung des Kühlmittels besteht in der Verwendung von Latentwärmespeichern. Z.B. ist es bei Straßenkraftfahrzeugen bekannt, einen Parafin- oder Salzlösungsspeicher einzusetzen. Das Latentwärmespeichermedium Parafin befindet sich in dem voll aufgeladenen Zustand des Speichers auf einem Temperaturniveau von ca. 100°C.

Derartige Latentwärmespeicher benötigen ein großes Bauvolumen, um die für die Vorwärmung benötigte Wärme zu speichern. Auch das Gewicht solcher Speicher ist erheblich. Ein weiterer Nachteil besteht darin, dass sich die Speicher nur langsam entladen lassen, d.h. der Prozess des Vorwärmens nimmt erhebliche Zeit in Anspruch. Insbesondere das Latentwärmespeichermedium Parafin besitzt eine geringe Wärmeleitfähigkeit. Leistungsstarke Brennkraftmaschinen lassen sich daher in vertretbarer Zeit und bei vertretbarem Bauvolumen und Gewicht nicht mit den bekannten Latentwärmespeichern erwärmen.

JP 2007 309 570 A betrifft eine Mehrzahl von Wärmespeicherbehältern, die miteinander verbunden sind, bezüglich dem Ein-/Ausschalten eines Schalters zum Freisetzen von Unterkühlung. Das Wärmespeichermaterial ist in einem oberen Raum des Behälters aufgenommen und der Strom eines Wärmemediums, das außerhalb des Behälters strömt, wird umgekehrt zwischen Wärmespeicherung und Wärmenutzung.

Es ist eine Aufgabe, eine Anordnung mit einem Kühlmittelkreislauf für eine Brennkraftmaschine und einer Vorwärmeinrichtung anzugeben, die bei möglichst geringem Bauvolumen für die Vorwärmeinrichtung sowie bei möglichst geringem und effizientem Einsatz von Energie in kurzer Zeit vorwärmbar ist. Ferner ist es eine Aufgabe der vorliegenden Erfindung, ein Verfahren zum Vorwärmen einer Brennkraftmaschine anzugeben.

Ein erster Grundgedanke der vorliegenden Erfindung besteht in der Verwendung eines Latentwärmespeichermediums, das eine möglichst hohe Phasenübergangstemperatur aufweist, welche über der maximal zulässigen Kühlmitteltemperatur liegt. Dabei wird bevorzugt, dass die Phasenübergangstemperatur mindestens 100 K über der maximal zulässigen Kühlmitteltemperatur liegt, d. h. deutlich darüber. Z.B. beträgt die maximal zulässige Kühlmitteltemperatur bei Wasser 100°C und bei Öl 200°C. Je nach Kühlmittel wird daher ein Latentwärmespeichermedium gewählt, das eine Phasenübergangstemperatur von mehr als 200°C oder mehr als 300°C hat. Besonders bevorzugt wird Aluminium als Latentwärmespeichermedium, das bei normalem Umgebungsdruck für den Phasenübergang von fest auf flüssig eine Phasenübergangstemperatur von ca. 660°C hat. Aluminium ist als Speichermedium gut geeignet, da es vor allem in flüssigem Zustand, aber auch in festem Zustand sehr gut Wärme leitet. Dies gilt in etwas geringerem Maße auch für andere Metalle, die alternativ zu Aluminium oder zusätzlich als Latentwärmespeichermedium zum Einsatz kommen können. Die hohe Wärmeleitfähigkeit von Metallen ermöglicht eine besonders schnelle Beladung und besonders schnelle Entladung des Speichers. Auch ist die Temperatur des Speichermediums innerhalb des Speichers sehr homogen, d.h. es treten nur sehr geringe Temperaturunterschiede in dem Speicher auf.

Die Verwendung von hochtemperaturgeeigneten Speichermedien und der Betrieb des Latentwärmespeichers bei solchen hohen Temperaturen führt zu erheblich größeren Energiespeicherdichten als bei konventionellen Niedertemperaturspeichern. Die Folge davon sind ein kleineres Bauvolumen und ein geringeres Gewicht des Latentwärmespeichers. Insbesondere bei Schienenfahrzeugen kommt hinzu, dass typischerweise sehr viel Bremsleistung zum Aufladen des Latentwärmespeichers zur Verfügung steht. Die Bremsenergie wird während des Bremsvorganges des Schienenfahrzeugs durch den generatorischen Betrieb der Fahrmotoren gewonnen und kann z.B. über elektrische Heizwiderstände, die innerhalb des Latentwärmespeichers angeordnet sind, zum Aufladen genutzt werden. Elektrische Fahrmotoren kommen heutzutage üblicherweise auch bei Schienenfahrzeugen zum Einsatz, die über eine Brennkraftmaschine für die Traktion des Schienenfahrzeugs verfügen. Es ist üblich, dass die Brennkraftmaschine einen elektrischen Generator antreibt und die von dem Generator produzierte elektrische Energie für den Betrieb der Fahrmotoren eingesetzt wird.

Ein zweiter Grundgedanke der vorliegenden Erfindung besteht in der Steuerbarkeit des Wärmeübergangs von dem Speichermedium eines Latentwärmespeichers auf das Kühlmittel in dem Kühlmittelkreislauf. Bei in gleicher Weise beladenem Latentwärmespeicher bedeutet ein besserer Wärmeübergang einen höheren Wärmestrom und umgekehrt. Die Steuerbarkeit des Wärmeübergangs ermöglicht den Einsatz anderer Latentwärmespeichermedien, insbesondere von solchen Materialien, die einen speicherrelevanten Phasenübergang (z.B. von fest nach flüssig) bei höheren Temperaturen aufweisen, als es bei bisherigen Speichern, z.B. bei Parafinspeichern, bekannt ist. Die Steuerbarkeit des Wärmeübergangs hat jedoch auch bei Latentwärmespeichern mit an sich bereits bekannten Speichermedien den Vorteil, dass höhere Wärmeströme möglich sind, wenn der Speicher entsprechend konstruiert ist, z.B. eine größere Fläche aufweist, durch die hindurch der Wärmeübergang stattfindet. Durch die Steuerung des Wärmeübergangs kann die auf das Kühlmittel übergehende Wärme reduziert werden, wenn keine Vorwärmung benötigt wird. Im Fall gleicher Temperaturverhältnisse bei unterschiedlichem Wärmeübergang entspricht der Wärmeübergang der pro Zeiteinheit übertragenen Wärme, d.h. der Wärmeleistung. Da aber bei unterschiedlichen Latentwärmespeichern mit unterschiedlichen Speichermedien in der Regel verschiedene Temperaturverhältnisse herrschen, entspricht der Wärmeübergang im Sinne dieser Beschreibung einem effektiven Gesamt-Wärmeübergangskoeffizienten der an dem Wärmeübergang beteiligten Materialien. Insbesondere wird zur Steuerung des Wärmeübergangs vorgeschlagen, dass ein Behälter des Latentwärmespeichers, der das latente Wärmespeichermedium enthält, relativ zu dem Kühlmittelkreislauf bewegt wird, so dass sich aufgrund verschiedener Relativpositionen des Behälters und des Kühlmittelkreislaufes die Wärmeübergangsfläche und damit auch der Wärmeübergang ändert. Unter der Wärmeübergangsfläche wird eine Fläche quer zur Strömungsrichtung der Wärme verstanden, durch die ein Wärmeübergang von dem Wärmespeichermedium auf das Kühlmittel stattfindet. Durch die Bewegung des Behälters und des Kühlmittelkreislaufes relativ zueinander wird die Größe dieser Wärmeübergangsfläche verändert. Falls, wie es bei einer bevorzugten Ausführungsform der Fall ist, im Bereich der Außenoberfläche des Speichers Materialien unterschiedlicher Wärmeleitfähigkeit vorhanden sind, nämlich gut wärmeisolierende Materialien und gut wärmeleitfähige Materialien, wird lediglich der auf die gut wärmeleitfähigen Materialien entfallende Anteil der Außenoberfläche als Wärmeübergangsfläche bezeichnet. Ein geringer Teil Wärme wird auch durch die gut wärmeisolierenden Materialien auf das Kühlmittel übertragen. Dieser Teil ist jedoch vernachlässigbar klein.

Zur Einstellung der Wärmeübergangsfläche kann der Behälter bewegt werden. Es ist jedoch alternativ oder zusätzlich auch möglich, einen Teil des Kühlmittelkreislaufs und/oder einen Wärmetauscher oder Teil eines Wärmetauschers zur Übertragung der Wärme von dem Latentwärmespeichermedium auf das Kühlmittel zu bewegen. Im Fall, dass zumindest auch ein wärmeisolierendes Material zwischen Kühlmittelkreislauf und Latentwärmespeichermedium bewegt wird, kann dieses Material als Teil des Wärmetauschers betrachtet werden. Befindet sich das wärmeisolierende Material in einer Position, in der es den Wärmeübergang behindert, weist der Wärmetauscher eine schlechte Wärmeleitfähigkeit auf. Insbesondere durch graduelles Entfernen des wärmeisolierenden Materials wird die Wärmeleitfähigkeit verbessert, so dass eine Vorwärmung des Kühlmittels stattfinden kann.

Bevorzugt wird jedoch, dass der Behälter bewegt wird, der das Latentwärmespeichermedium enthält, um die Wärmeübergangsfläche einzustellen.

Die Kombination der beiden oben genannten Grundgedanken der Erfindung führt dazu, dass einerseits Energiespeicher mit hoher Speicherdichte zum Einsatz kommen können und andererseits die bei den hohen Temperaturen gespeicherte Energie (sensible Wärme und latente Wärme) über lange Zeiträume gespeichert werden kann. Da der Wärmeübergang von dem Latentwärmespeicher auf das Kühlmittel steuerbar ist, kann in Zeiträumen, in denen keine Vorwärmung benötigt wird, ein geringer Wärmeübergang eingestellt werden. Wird dagegen eine Vorwärmung benötigt, wird ein höherer Wärmeübergang eingestellt. Kann der Wärmeübergang auf einen sehr niedrigen Wert eingestellt werden, steht die gespeicherte Wärme z. B. auch nach langen Stillstandszeiten eines Fahrzeugs noch für eine Vorwärmung zur Verfügung. Wegen der großen Energiespeicherdichte kann während der Stillstandszeiten zumindest ein kleiner Betrag Wärme entnommen werden und z.B. zum Zwecke des Frostschutzes eingesetzt werden.

Die wesentlichen Vorteile der Erfindung können wie folgt zusammengefasst werden: Zusätzlicher Treibstoff für den Betrieb eines auf Verbrennung von Treibstoff basierenden Vorwärmgerätes können eingespart werden. Es treten auch keine Schadstoffemissionen durch Verbrennungsprodukte des Vorwärmgerätes auf. Die Energiespeicherdichte ist aufgrund der bei hohen Temperaturen liegenden Phasenübergänge sehr hoch, da auch entsprechend viel sensible Wärme gespeichert wird. Das Speichergewicht ist dabei sehr gering. Durch Steuerung des Wärmeübergangs kann die Speicherentladung auf sehr geringe Werte eingestellt werden. Insbesondere deshalb kann auf ein separates Vorwärmgerät mit Brennstoffverbrauch verzichtet werden. Insbesondere bei Einsatz von Metall, vorzugsweise Aluminium, als Speichermedium können sehr hohe Wärmeströme während der Vorwärmung erzeugt werden. Die Zeit, die für die Vorwärmung der Brennkraftmaschine benötigt wird, ist daher sehr gering.

Insbesondere wird Folgendes vorgeschlagen: Eine Anordnung mit einer Brennkraftmaschine, wobei
- die Brennkraftmaschine thermisch mit mindestens einem Kühlmittelkreislauf gekoppelt ist, durch den ein Kühlmittel mit einer maximal zulässigen Kühlmitteltemperatur fließt,
- der Kühlmittelkreislauf über zumindest einen Wärmetauscher thermisch mit einem Latentwärmespeicher gekoppelt oder zumindest zeitweise koppelbar ist,
- der Latentwärmespeicher ein Latentwärmespeichermedium aufweist, das eine Phasenübergangstemperatur"die über der maximal zulässigen Kühlmitteltemperatur liegt, vorzugsweise mehr als 600 °C, aufweist,
- das Latentwärmespeichermedium in einem Behälter des Latentwärmespeichers angeordnet ist,
- der Behälter relativ zu dem zumindest einen Wärmetauscher beweglich ist,
- der Behälter und der Wärmetauscher in zumindest zwei verschiedene Relativpositionen bringbar sind, in denen der Wärmeübergang von dem Latentwärmespeichermedium auf Kühlmittel in dem Kühlmittelkreislauf unterschiedlich groß ist.

Da es sich bei der Brennkraftmaschine um eine beliebige Brennkraftmaschine handeln kann, ist die Brennkraftmaschine ein lediglich optionaler zusätzlicher Bestandsteil der Anordnung gemäß der vorliegenden Erfindung.

Ferner wird ein Verfahren zum Vorwärmen einer Brennkraftmaschine vorgeschlagen, wobei
- die Brennkraftmaschine vor einem Start der Brennkraftmaschine durch Erwärmen von Kühlmittel in mindestens einem Kühlmittelkreislauf erwärmt wird, durch den ein Kühlmittel mit einer maximal zulässigen Kühlmitteltemperatur fließt,
- das Kühlmittel in dem Kühlmittelkreislauf mit Wärme aus einem Latentwärmespeicher erwärmt wird,
- der Latentwärmespeicher in einem Behälter ein Latentwärmespeichermedium aufweist, das bei einer Phasenübergangstemperatur, die über der maximal zulässigen Kühlmitteltemperatur liegt, vorzugsweise mehr als 600 °C, Wärme an das Kühlmittel abgibt,
- zum Steuern einer Stärke des Wärmestromes von dem Latentwärmespeichermedium auf das Kühlmittel der Behälter relativ zu dem Kühlmittelkreislauf bewegt wird, sodass sich aufgrund verschiedener Relativpositionen des Behälters und des Kühlmittelkreislaufs der Wärmeübergang ändert.

Bei dem vorgeschlagenen Verfahren sind zumindest zwei verschiedene Relativpositionen des Behälters und des Wärmetauschers möglich. Sind lediglich zwei Relativpositionen einstellbar, handelt es sich bei der einen Relativposition vorzugsweise um einen Zustand des Speichers, in dem eine Vorwärmung stattfindet, wenn der Speicher aufgeladen ist. Bei der anderen Relativposition handelt es sich um einen Zustand, in dem der Latentwärmespeicher bestmöglich gegen Wärmeverluste isoliert ist. Vorzugsweise jedoch ist die Relativposition des Behälters und des Wärmetauschers kontinuierlich verstellbar, so dass der Wärmeübergang kontinuierlich auf beliebige Werte innerhalb eines Wertebereichs zwischen dem geringstmöglichen und dem größtmöglichen Wärmeübergang einstellbar ist. Dies ermöglicht es, dass eine Steuerungseinrichtung zum Steuern der Vorwärmung für einen optimalen Verlauf der Vorwärmung sorgt. Z.B. kann zu Beginn der Vorwärmung der größtmögliche Wärmeübergang stattfinden. Sobald sich das Kühlmittel bereits auf Betriebstemperatur erwärmt hat, kann der Wärmeübergang auf einen geringeren Wert eingestellt werden, der z.B. einem quasi statischen Zustand entspricht, indem das Kühlmittel genauso viel Wärme von dem Latentwärmespeicher aufnimmt, wie es an die Brennkraftmaschine abgibt. Da sich die Temperatur der Brennkraftmaschine während der Vorwärmung erhöht, kann der Wärmeübergang kontinuierlich reduziert werden. Es sind jedoch auch andere Prozesse mit anderen zeitlichen Verläufen des Wärmeübergangs möglich.

Als Kühlmittel wird typischerweise Wasser oder Öl verwendet. Insbesondere bei Verwendung von Wasser als Kühlmittel oder einer Mischung von Wasser mit Frostschutzmittel ist darauf zu achten, dass das Kühlmittel nicht verdampft, d.h. die Siedetemperatur überschritten wird. Bei konventionellen Niedertemperatur-Latentwärmespeichern, die bei Speichertemperaturen um die 100°C betrieben werden, besteht diese Gefahr nicht. Bei dem erfindungsgemäßen HochtemperaturLatentwärmespeicher jedoch kann prinzipiell ein Verdampfen von derartigem Kühlmittel stattfinden. Aufgrund der Steuerbarkeit des Wärmeübergangs kann das Verdampfen von Kühlmittel verhindert werden.

In einer konkreten Ausführungsform des Latentwärmespeichers weist eine Wand des Behälters, der das Latentwärmespeichermedium enthält, zumindest einen ersten Bereich mit relativ großer Wärmeleitfähigkeit und zumindest einen zweiten Bereich mit relativ kleiner Wärmeleitfähigkeit auf. Eine äußere Schale des Latentwärmespeichers, die vorzugsweise in mechanischen Kontakt zu zumindest dem ersten Bereich mit großer Wärmeleitfähigkeit gelangen kann, umgibt die Wand des Behälters. Die äußere Schale weist eine erste Zone zum Übertragen von Wärme auf das Kühlmittel auf und weist außerdem zumindest eine zweite Zone auf, die den Behälter gegen Wärmeverluste dämmt. Es sind zumindest zwei verschiedene Relativpositionen des Behälters und seiner Umgebung, d.h. der Wand des Behälters und der Schale, einstellbar. In einer ersten Relativposition fließt durch den ersten Bereich der Behälterwand, der eine große Wärmeleitfähigkeit besitzt, und durch die erste Zone der Schale ein Wärmestrom von dem Latentwärmespeichermedium auf das Kühlmittel. Insbesondere ist dazu der zumindest eine erste Bereich vollflächig in Kontakt mit der ersten Zone der Schale. In einer zweiten Relativposition des Behälters und seiner Umgebung fließt durch die erste Zone ein schwächerer Wärmestrom von dem Latentwärmespeichermedium auf das Kühlmittel. Insbesondere ist dieser Wärmestrom so schwach, dass er den Wärmeverlusten des Speichers bei bestmöglicher Isolierung, d.h. bei dem geringstmöglichen Wärmeübergang, entspricht.

Wenn in dieser Beschreibung von einer Schale des Latentwärmespeichers die Rede ist, so bedeutet dies nicht, dass die Schale aus einem einzigen Material bestehen muss oder wie die Schale einer Orange überall etwa gleichmäßig dick ist. Vielmehr kann die Schale vorzugsweise aus Zonen hoher Wärmeleitfähigkeit und Zonen geringer Leitfähigkeit bestehen. Die Zonen geringer Leitfähigkeit sind vorzugsweise aus gut wärmedämmendem Material und/oder durch einen Hohlraum gebildet, der in besonderer Ausführungsform ein Vakuum enthalten kann. Auch die Behälterwand kann aus unterschiedlichen Materialien bestehen und kann in dem zweiten Bereich mit geringer Wärmeleitfähigkeit Hohlräume aufweisen oder zumindest einen Hohlraum aufweisen, der evakuiert ist.

Ein geeignetes Material mit hoher Wärmeleitfähigkeit ist Graphit. Es wird bevorzugt, dass Graphit sowohl für den ersten Bereich der Behälterwand mit relativ großer Wärmeleitfähigkeit als auch für die erste Zone der Schale zur Übertragung der Wärme auf das Kühlmittel verwendet wird. Graphit ist insbesondere auch bei Temperaturen um den Phasenübergangspunkt (660°C) von Aluminium und darüber geeignet. Als Wärmedämmungsmaterial sind z.B. Luft, Inertgas (z. B. Stickstoff) und Gas mit geringem Druck (Vakuum) geeignet.

Bei einer besonderen Ausführungsform des Latentwärmespeichers mit Bereichen unterschiedlicher Wärmeleitfähigkeit der Behälterwand und mit unterschiedlichen Zonen der Schale sind die zumindest zwei verschiedenen Relativpositionen des Behälters und seiner Umgebung durch Drehen des Behälters um eine Drehachse einstellbar, so dass in einer ersten Drehposition durch den ersten Bereich und die erste Zone ein Wärmestrom von dem Latentwärmespeichermedium auf das Kühlmittel fließt und so dass in einer zweiten Drehposition durch die erste Zone ein schwächerer Wärmestrom von dem Latentwärmespeichermedium auf das Kühlmittel fließt. Bei der zweiten Drehposition handelt es sich wiederum vorzugsweise um die Position, in der der Behälter bestmöglich wärmeisoliert ist. Wie auch bei anderen Bauformen wird auch hier bevorzugt, dass die Relativposition kontinuierlich verstellbar ist. Dies ist bei der drehbaren Ausgestaltung des Behälters besonders einfach möglich. Insbesondere ein um die Drehachse rotationssymmetrischer Behälter kann um beliebige Winkel verdreht werden, so dass der zumindest eine Bereich der Behälterwand mit großer Wärmeleitfähigkeit mit mehr oder weniger großer Fläche der ersten Zone oder der zumindest einen ersten Zone der Schale gegenüber steht und somit mehr oder weniger Wärmeleistung der Erwärmung des Kühlmittels erzielt wird. Auf ein konkretes Ausführungsbeispiel wird noch in der Figurenbeschreibung eingegangen.

In der zumindest einen ersten Zone der Schale befindet sich vorzugsweise ein Wärmetauscher zur Übertragung der Wärme von dem Latentwärmespeichermedium auf das Kühlmittel. Dabei kann das Material der ersten Zone Teil des Wärmetauschers sein. In konkreter Ausführungsform kommt insbesondere ein Blockwärmetauscher in Frage, bei dem ein Block aus gut wärmeleitendem Material, das die erste Zone bildet, von zumindest einem Rohr oder einer anderen Durchgangsöffnung durchzogen ist, durch die das Kühlmittel fließt.

Ein Vorteil der Ausführungsform mit Schale und relativ dazu beweglichem Behälter besteht darin, dass in der zweiten Relativposition eine sehr gute Wärmeisolierung erzielt werden kann. In dieser zweiten Relativposition kann der zumindest eine erste Bereich mit relativ großer Wärmeleitfähigkeit der Behälterwand an einem sehr gut wärmedämmenden Material der Schale anliegen.

Bei einer alternativen Ausgestaltung des Latentwärmespeichers ist der Behälter, der das Latentwärmespeichermedium enthält, ein innerer Behälter, der innerhalb eines äußeren Behälters beweglich angeordnet ist, wobei sich in einem Teilbereich zwischen dem inneren Behälter und einer Außenwand des äußeren Behälters eine Flüssigkeit befindet. Die Flüssigkeit wird bei Bewegung des inneren Behälters in eine erste Richtung von diesem in zumindest einen Hohlraum zwischen dem inneren Behälter und der Außenwand des äußeren Behälters gedrängt, so dass die Flüssigkeit den Wärmestrom durch den nun zumindest teilweise gefüllten Hohlraum auf das Kühlmittel verbessert. Bei Bewegung des inneren Behälters in eine zweite, der ersten Richtung entgegengesetzte Richtung, kann die Flüssigkeit wieder in die Zone zurückfließen, aus der sie verdrängt wurde. Daher wird es bevorzugt, dass die erste Richtung, in der der innere Behälter bewegt wird, nach unten gerichtet ist und sich die Flüssigkeit unterhalb des inneren Behälters befindet. Der innere Behälter drückt dabei mit fortschreitender Bewegung zunehmend von oben auf die Flüssigkeit und verdrängt diese teilweise in den Hohlraum oder die Hohlräume zwischen dem inneren Behälter und der Außenwand des äußeren Behälters.

Bei der Flüssigkeit handelt es sich um ein Material, das bei der normalen Betriebstemperatur des Latentwärmespeichers flüssig ist. Wenn der Speicher vollständig entladen ist, kann das Material jedoch z.B. auch fest sein. Ein geeignetes Material ist z.B. Zinn oder ein anderes Metall, das einen im Vergleich zu dem Latentwärmespeichermedium in dem Behälter niedrigeren Schmelzpunkt hat. Insbesondere wenn das eigentliche Latentwärmespeichermedium in dem inneren Behälter Aluminium ist, eignet sich Zinn als Flüssigkeit in dem Zwischenraum zwischen innerem Behälter und Außerwand des äußeren Behälters.

Bei dieser Ausgestaltung des Latentwärmespeichers wird das Kühlmittel vorzugsweise unmittelbar außerhalb der Außenwand des äußeren Behälters entlanggeführt, wenn es während der Vorwärmung erwärmt werden soll, wobei z.B. Rohre des Kühlmittelkreislaufs in mechanischem Kontakt mit der Außenwand sind und vorzugsweise in mehreren Windungen um die Außenwand herumgeführt sind. Die Außenwand des äußeren Behälters bildet in diesem Fall gemeinsam mit den Rohren oder Rohrabschnitten des Kühlmittelkreislaufs einen Wärmetauscher zur Übertragung der Wärme von dem Latentwärmespeichermedium auf das Kühlmittel. Es sind jedoch auch andere Ausgestaltungen möglich, z.B. kann ein Plattenwärmetauscher oder können mehrere Plattenwärmetauscher bei dieser Ausführungsform eingesetzt werden. Eine Platte des Plattenwärmetauschers bildet in diesem Fall vorzugsweise die Außenwand des äußeren Behälters.

Ein Vorteil der Ausführungsform mit Flüssigkeit in dem Zwischenraum zwischen dem inneren Behälter und der Außenwand des äußeren Behälters besteht darin, dass die Flüssigkeit unterschiedliche Änderungen der Abmessungen von Teilen des Speichers aufgrund unterschiedlicher Wärmeausdehnung oder Wärmekontraktion ausgleicht. Die Beweglichkeit des inneren Behälters wird daher nicht durch Klemmung der Wände des inneren und des äußeren Behälters eingeschränkt oder behindert. Auch ist vor allem bei Wahl von Metall als Flüssigkeit in dem Zwischenraum ein sehr guter Wärmeübergang von dem inneren Behälter auf das Kühlmittel erzielbar, insbesondere da sich die Flüssigkeit sehr gut an die Oberflächenform an die Innenseite der Außenwand des äußeren Behälters und der Außenseite der Außenwand des inneren Behälters anpasst. Auch ist der Wärmetransport innerhalb einer vor allem metallischen Flüssigkeit sehr gut. Ferner ist der Wärmeübergang gut kontinuierlich einstellbar, indem aufgrund der Verdrängung der Flüssigkeit aus dem Vorratsraum, in dem sie sich außerhalb von Perioden der Vorwärmung befindet, mehr oder weniger große Bereiche des Hohlraums oder der Hohlräume zwischen innerem Behälter und Außenwand des äußeren Behälters mit der Flüssigkeit gefüllt sind. Ferner ist der Verschleiß der beteiligten Speicherteile durch die Bewegung des inneren Behälters äußerst gering, da die Flüssigkeit keinen Verschleiß bewirkt. Reiben dagegen mechanische Teile bei einer Bewegung aneinander, ist ein Verschleiß grundsätzlich möglich. Auch kann der gesamte Außenumfang des Speichers, d.h. die gesamte sich um den inneren Behälter herum erstreckende Wand des äußeren Behälters als Wärmetauscherfläche genutzt werden.

Ausführungsbeispiele der Erfindung werden nun unter Bezugnahme auf die beigefügte Zeichnung beschrieben. Die einzelnen Figuren der Zeichnung zeigen schematisch:
- Fig. 1: einen Querschnitt durch eine erste Ausführungsform eines Latentwärmespeichers, wobei sich der Speicherbehälter in einer ersten Drehposition befindet, die der größten einstellbaren Wärmeübergangsfläche entspricht,
- Fig. 2: einen Querschnitt durch den in Fig. 1 dargestellten Latentwärmespeicher, wobei sich der Speicherbehälter in einer zweiten Drehposition befindet, in der die Wärmeübergangsfläche kleiner ist als in der Drehposition gemäß Fig. 1,
- Fig. 3: einen Querschnitt durch den Speicher gemäß Fig. 1 und Fig. 2, wobei sich der Speicherbehälter jedoch in einer Drehposition befindet, in der die Wärmeübergangsfläche den kleinstmöglichen einstellbaren Wert annimmt,
- Fig. 4: einen Längsschnitt durch den in Fig. 1 bis Fig. 3 dargestellten Speicher, wobei die Drehachse des Speicherbehälters in der Figurenebene liegt und wobei sich der Speicherbehälter in der in Fig. 1 dargestellten Drehposition befindet,
- Fig. 5: einen vertikalen Querschnitt durch ein zweites Ausführungsbeispiel eines Latentwärmespeichers, wobei sich der innere Speicherbehälter in einer oberen Position befindet, in der der Wärmeübergang den kleinstmöglichen einstellbaren Wert hat,
- Fig. 6: einen weiteren vertikalen Längsschnitt durch den in Fig. 5 dargestellten Speicher, wobei sich der innere Speicherbehälter in einer tieferen Position befindet als in Fig. 5 dargestellt und wobei der innere Speicherbehälter an seinem Boden Kontakt mit einer Flüssigkeit hat, die sich in einem Bodenraum des äußeren Speicherbehälters befindet,
- Fig. 7: den in Fig. 5 und 6 dargestellten Speicher in einem vertikalen Längsschnitt, wobei sich der innere Speicherbehälter in einer noch tieferen Position als in Fig. 6 dargestellt befindet und wobei der innere Speicherbehälter in den Bodenraum des äußeren Speicherbehälters mit der Flüssigkeit eingetaucht ist, so dass die Flüssigkeit in höhere Bereiche eines Zwischenraums zwischen der Außenwand des inneren Speicherbehälters und der Außenwand des äußeren Speicherbehälters verdrängt worden ist, so dass der Wärmeübergang den maximal möglichen einstellbaren Wert annimmt,
- Fig. 8: eine Lokomotive mit einer Brennkraftmaschine, die flüssigkeitsgekühlt ist, wobei das Kühlmittel durch einen Latentwärmespeicher erwärmbar ist.

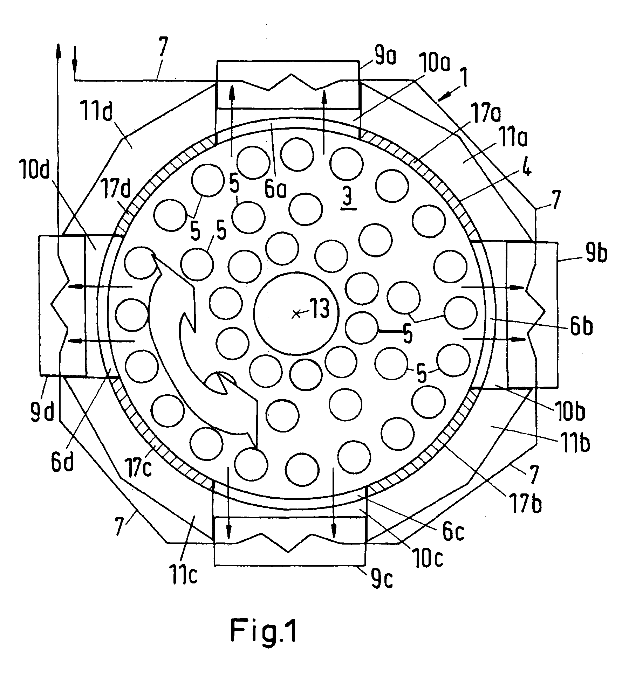

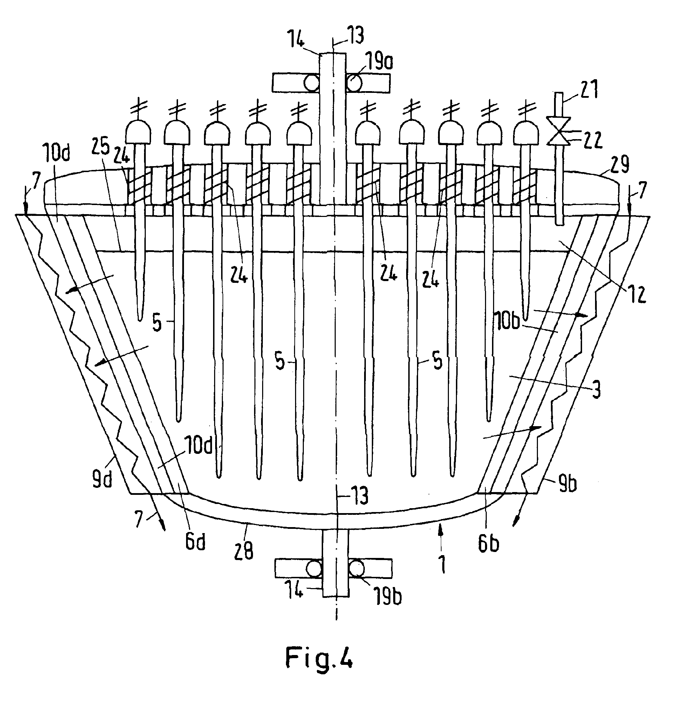

Fig. 1 bis Fig. 3 zeigen einen Querschnitt durch ein erstes Ausführungsbeispiel eines Latentwärmespeichers. Fig. 4 zeigt einen entsprechenden Längsschnitt in der Ebene einer Drehachse 13 des Speicherbehälters. Der Speicherbehälter 3 weist eine doppelwandige Außenwand auf, deren verschiedene Segmente mit den Bezugszeichen 6 und 17 bezeichnet sind. Dabei sind die Bereiche 6a, 6b, 6c, 6d mit einem gut wärmeleitenden Material, z.B. Graphit, gefüllt, dagegen sind die Bereiche 17a, 17b, 17c, 17d mit einem wärmeisolierenden Material versehen. Die Bereiche 17, 6 wechseln sich in Umfangsrichtung der Speicherbehälterwand alternierend ab. In dem Ausführungsbeispiel sind jeweils vier Bereiche mit gut wärmeleitendem Material und vier Bereiche mit wärmeisolierendem Material dargestellt. Es ist jedoch auch möglich, dass eine andere Anzahl von gut wärmeleitenden und isolierenden Bereichen der Behälterwand vorgesehen ist.

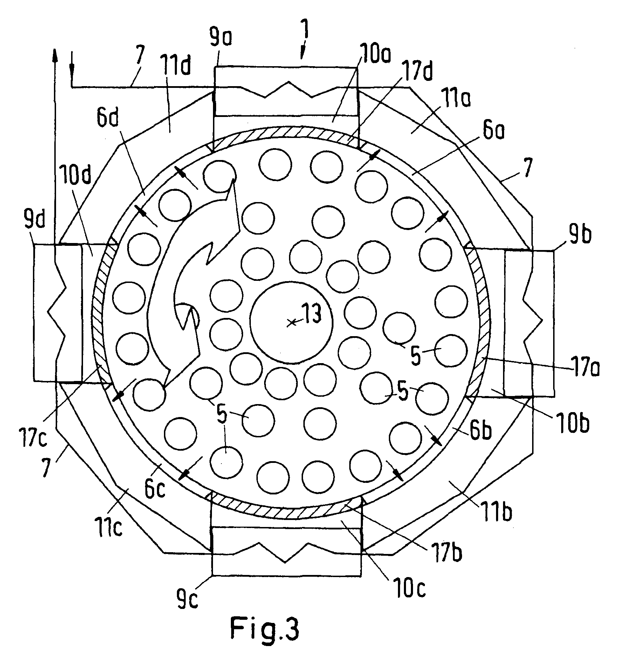

Entsprechend der Anzahl gut wärmeleitender und isolierender Bereiche der Behälterwand weist der Speicher 1 eine gleichgroße Anzahl von ortsfesten Bereichen 10 auf, die ebenfalls durch gut wärmeleitendes Material, z.B. Graphit, gebildet sind. Radial außerhalb dieser Bereiche 10 befindet sich jeweils ein Blockwärmetauscher 9a, 9b, 9c, 9d, der beim Betrieb der Vorwärmung einer Brennkraftmaschine (nicht dargestellt in Fig. 1) von einem Kühlmittel durchflossen wird, so dass das Kühlmittel mit Wärme aus dem Speicherbehälter erwärmt wird. In Umfangsrichtung zwischen den Bereichen 10a, 10b, 10c, 10d aus gut wärmeleitendem Material befinden sich Bereiche aus wärmeisolierendem Material 11 a, 11 b, 11c, 11d. Wie auch die verschiedenen Bereiche der Speicherbehälterwand wechseln sich diese gut wärmeleitenden Bereiche 10 und die wärmeisolierenden Bereiche 11 alternierend in Umfangsrichtung ab. Dabei erstrecken sich die gut wärmeleitenden Bereiche 6 der Speicherbehälterwand in Umfangsrichtung über denselben Winkelbereich wie die gut wärmeleitenden Bereiche 10. In der in Fig. 1 dargestellten Drehstellung liegen diese gut wärmeleitenden Bereiche 6 der Speicherbehälterwand und die ortsfesten gut wärmeleitenden Bereiche 10 vollflächig aneinander. Daher liegen auch die wärmeisolierenden Bereiche 17 der Speicherbehälterwand und die ortsfesten isolierenden Bereiche 11 vollflächig aneinander an. Vorzugsweise sind die Winkelbereiche der gut wärmeleitenden Bereiche der Speicherwand und die Winkelbereiche der wärmeisolierenden Bereiche 17 der Speicherbehälterwand gleich groß. Der Grund hierfür liegt darin, dass in diesem Fall einerseits die größtmögliche Übertragungsfläche zur Übertragung von Wärme aus dem Speicherinneren auf die ortsfesten gut wärmeleitenden Bereiche 10 zur Verfügung steht (in der in Fig. 1 dargestellten Drehstellung des Speicherbehälters 3) und andererseits in der in Fig. 3 dargestellten Drehstellung die maximal mögliche Wärmeisolierungswirkung erzielt wird.

Wie bereits erwähnt, ist der Speicherbehälter 3 um die Drehachse 13, die gleichzeitig seine Rotationssymmetrieachse ist, drehbar. Innerhalb des Speicherbehälters 3 befindet sich eine Mehrzahl von Heizwiderständen 5, die in Fig. 1 bis Fig. 3 durch Kreise symbolisiert sind. Zwischen den Heizwiderständen 5 befindet sich das Latentwärmespeichermaterial, im Ausführungsbeispiel Aluminium. Bei beladenem Speicher in der in Fig. 1 dargestellten Drehposition wird Wärme (wie durch insgesamt 8 lange Pfeile angedeutet ist, die in radialer Richtung nach außen weisen) von dem Latentwärmespeichermedium durch die gut wärmeleitenden Bereiche 6 der Speicherbehälterwand und durch die gut wärmeleitenden, ortsfesten Bereiche 10 auf die Blockwärmetauscher 9 übertragen und damit auf das durch die Wärmetauscher 9 hindurchfließende Kühlmittel. Der Kühlmittelkreislauf ist schematisch dargestellt und mit dem Bezugszeichen 7 bezeichnet.

Im Inneren des Bereichs, der das eigentliche Latentwärmespeichermedium enthält, befindet sich eine mechanische Konstruktion, die die Drehbeweglichkeit des Speicherbehälters ermöglicht. Diese Konstruktion kann in unterschiedlicher Weise ausgeführt sein, auch auf geringerem Raum als in Fig. 1 dargestellt. Auf die Konstruktion wird hier nicht näher eingegangen.

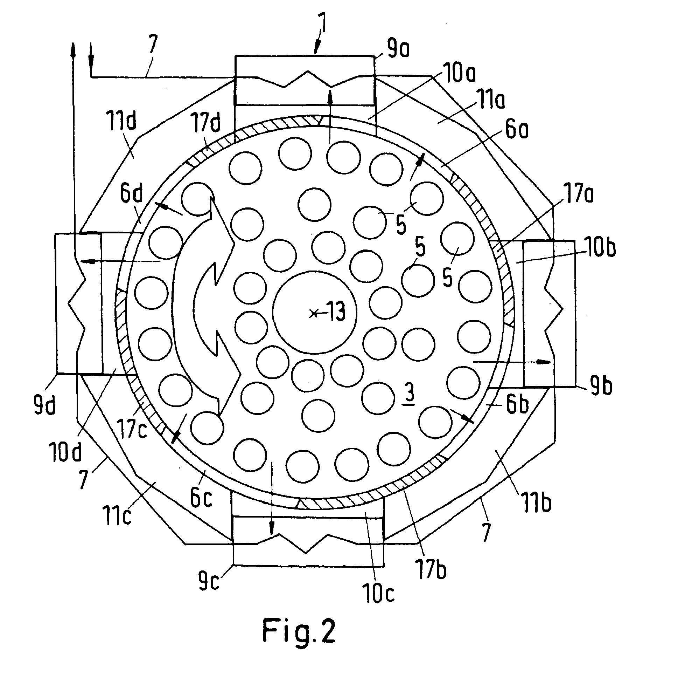

In der in Fig. 2 dargestellten Drehstellung, die durch eine Drehung um 22,5° im Uhrzeigersinn aus der in Fig. 1 dargestellten Drehstellung erreicht wurde, liegt nur noch ein Teil der Außenoberfläche der gut wärmeleitenden Bereiche 6 der Speicherbehälterwand den gut wärmeleitenden Bereichen 10, die nicht mitgedreht werden, gegenüber. Daher kann nur noch über diesen Teil der Außenoberfläche der gut wärmeleitenden Bereiche 6 ein Wärmetransport von dem Latentwärmespeichermedium zu dem Kühlmittel in den Wärmetauscherblöcken 9 stattfinden. Im Ergebnis ist der Wärmeübergang reduziert.

In der in Fig. 3 dargestellten Drehstellung, die durch weitere Drehung im Uhrzeigersinn um 22,5° aus der in Fig. 2 dargestellten Drehstellung erreicht wurde, liegen die gut wärmeleitenden Bereiche 6 der Speicherbehälterwand den ortsfesten, wärmeisolierenden Bereichen 11 gegenüber. Außerdem liegen die wärmeisolierenden Bereiche 17 der Speicherbehälterwand den ortsfesten, gut wärmeleitenden Bereichen 10 gegenüber. Daher ist der Wärmeübergang so klein wie möglich.

Die ortsfesten, gut und schlecht wärmeleitenden Bereiche 10, 11 bilden insgesamt eine Schale für den drehbaren Teil des Latentwärmespeichers.

Fig. 4 zeigt einen Längsschnitt durch den in Fig. 1 bis 3 dargestellten Speicher. Man erkennt rechts und links im Bild zwei der Wärmetauscherblöcke 9b, 9d, die von Kühlflüssigkeit des Kühlmittelkreislaufs 7 durchflossen werden, wenn eine Vorwärmung stattfindet. Wenn keine Vorwärmung stattfindet, kann die Kühlflüssigkeit dennoch durch die Wärmetauscherblöcke 9 fließen oder, alternativ, kann das Kühlmittel einen anderen Weg nehmen.

Der Speicherbehälter 3 befindet sich in der in Fig. 1 dargestellten Drehstellung, in der die gut wärmeleitenden Bereiche 6b, 6d in radialer Richtung den ortsfesten, gut wärmeleitenden Bereichen 10b, 10d gegenüberstehen.

In dem gezeigten Längsschnitt ist der Speicherbehälter etwa trapezförmig. Es sind jedoch auch andere Querschnittsformen möglich. An seinem Boden 28 ist der Speicherbehälter 3 wärmeisoliert, damit ein Wärmübergang lediglich an den Seiten, am Umfang in radialer Richtung stattfindet. An seinem Deckel 29 weist der Speicherbehälter eine Mehrzahl von Durchgangsöffnungen auf, durch die Heizwiderstände 5 in das Latentwärmespeichermedium eingetaucht sind. Die Durchgangsöffnungen für die Heizwiderstände 5 sind mit Federelementen 24 versehen, die ein Ausweichen der Heizstäbe nach oben ermöglichen, um Beschädigung durch thermische Ausdehnung zu vermeiden. Der elektrische Anschluss der Heizwiderstände 5 ist in Fig. 4 lediglich schematisch durch zwei schräge Striche symbolisiert.

Der Speicherbehälter 3 ist um die Drehachse 13 drehbar, die sich entlang der Rotationsachse einer Welle 14 durch die Mitte des Speicherbehälters hindurch erstreckt. Die Welle 14 kann (anders als in Fig. 4 dargestellt) durch den Speicherbehälter von oben nach unten verlaufen oder kann (wie in Fig. 4 dargestellt) unterbrochen sein und lediglich oben und unten an dem Speicherbehälter angreifen. Die Welle 14 ist in dem Ausführungsbeispiel durch ein oberes 19a und ein unteres 19b Lager drehbar gelagert.

Der obere Bereich innerhalb des Speicherbehälters 3 ist nicht mit dem Latentwärmespeichermedium gefüllt. Vielmehr befindet sich über dem Flüssigkeitsspiegel 25 des Latentwärmespeichermediums bzw. über der Oberfläche des erstarrten Latentwärmespeichermediums ein mit Inertgas gefüllter Raum. Dieser Raum kann über eine Gasleitung 21, die mit Hilfe eines Ventils 22 absperrbar ist, befüllt und entleert werden. Dieser gasgefüllte Raum ermöglicht es, dass sich bei Änderung des Aggregatzustandes des Latentwärmespeichermediums Volumenänderungen vollziehen können. Ferner isoliert der mit dem Inertgas gefüllte Raum das Latentwärmespeichermedium nach oben zum Deckel 29.

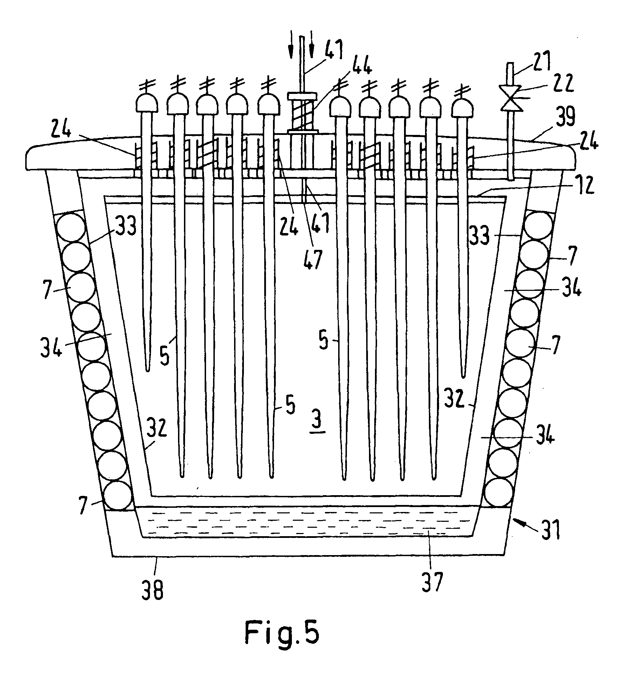

Bei dem zweiten, in Fig. 5 bis 7 dargestellten Ausführungsbeispiel 31 eines Latentwärmespeichers erstrecken sich mehrere Windungen des Kühlmittelkreislaufs 7 um den im Ausführungsbeispiel im Querschnitt kreisförmigen inneren Behälter 3. In dem inneren Behälter 3, der an seinem Außenumfang durch die Außenwand 32 und den Boden begrenzt wird, befinden sich wiederum mehrere Heizwiderstände 5. Generell gilt, dass der Hochtemperaturlatentwärmespeicher nicht zwangsläufig mit Heizwiderständen geladen werden muss, sondern es kommen auch andere Möglichkeiten in Frage, z.B. eine induktive Beladung durch elektromagnetische Felder, die von einer außerhalb des Speicherbehälters liegenden Primärspule oder Primärspulenanordnung erzeugt werden und im Inneren des Speicherbehälters in einer Sekundärspule oder Sekundärspulenanordnung eine Wechselspannung induzieren, die wiederum zu einem Wechselstrom führt, welcher das Latentwärmespeichermedium erwärmt. Im Fall eines elektrisch leitfähigen Latentwärmespeichermediums kann auch auf die Sekundärspule verzichtet werden. Die elektromagnetischen Felder erzeugen in dem elektrisch leitfähigen Material durch Induktion Wirbelströme, die wiederum zu dem Wärmeeintrag in das Speichermedium führen.

Der Innenbehälter 3 in Fig. 5 bis 7 ist von einer Innenwand 33 eines Außenbehälters umgeben, wobei sich zwischen der Innenwand 33 des Außenbehälters und der Außenwand 32 des Innenbehälters 3 ein Zwischenraum 34 befindet. In dem in Fig. 5 bis 7 dargestellten Zustand ist dieser Zwischenraum in der Figurenebene frei von Flüssigkeit und lediglich mit Inertgas befüllt. Bei dem Inertgas kann es sich z.B. um Stickstoff handeln.

Der in Fig. 5 dargestellte vertikale Längsschnitt des Speichers zeigt den Innenbehälter 3 in einer oberen Position, in der sein Boden nicht in die Flüssigkeit im Bodenbereich 37 des Außenbehälters eingetaucht ist. Gut zu erkennen sind in Fig. 5 bis Fig. 7 die mehreren Windungen des Kühlmittelkreislaufes 7, die um den Außenumfang des Außenbehälters herumführen. In dem in Fig. 5 dargestellten Zustand befindet sich in dem Zwischenraum 34 zwischen der Außenwand 32 des Innenbehälters 3 und der Innenwand 33 des Außenbehälters keine Flüssigkeit, da der Boden des Innenbehälters nicht in die Flüssigkeit im Bodenbereich 37 eingetaucht ist. Daher ist der Wärmeübergang zwischen dem Latentwärmespeichermedium im Innern des Innenbehälters 3 und der Flüssigkeit in dem Kühlmittelkreislauf 7 so klein wie möglich bei dem Speicher 31.

Wie durch zwei kurze nach unten weisende Pfeile oben in Fig. 5 angedeutet ist, ist der Innenbehälter 3 nach unten bewegbar. Dazu ist eine Stange 41 vorgesehen, die über einen Stempel 47 auf den Innenbehälter 3 einwirkt. Die Details der mechanischen Konstruktion sind hier nicht näher dargestellt.

Die Heizwiderstände 5 sind wie auch in dem Ausführungsbeispiel der Fig. 1 bis 4 federbelastet. Ferner ist ebenfalls ein Gasanschluss 21 mit Absperrventil 22 vorgesehen, um den Zwischenraum 34 und den Raum zwischen dem Latentwärmespeichermedium und dem Deckel 39 des Speichers 31 mit Inertgas unter Druck zu befüllen.

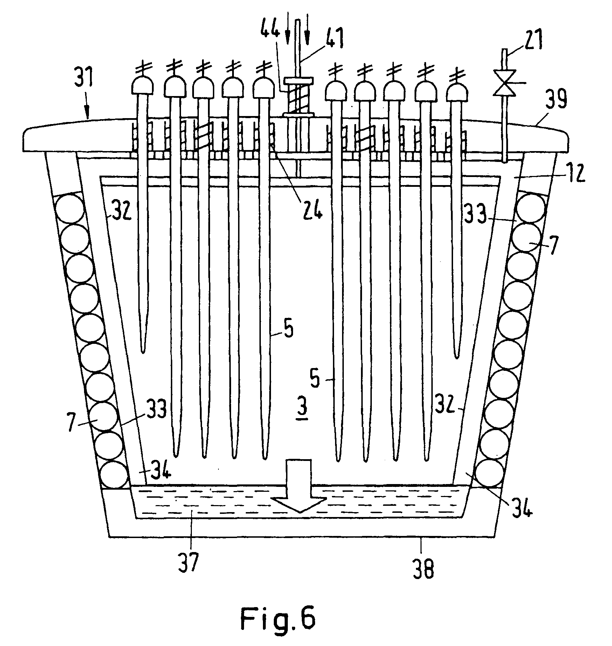

Fig. 6 zeigt einen vertikalen Längsschnitt ähnlich dem in Fig. 5, wobei jedoch der Innenbehälter 3 nach unten bewegt wurde, so dass sein Boden in Kontakt mit der Flüssigkeitsoberfläche der Flüssigkeit im Bodenraum 37 des Außenbehälters gelangt ist. Diese Flüssigkeit ist z.B. Zinn. Das Latentwärmespeichermedium ist z.B. Aluminium. In dem in Fig. 6 dargestellten Zustand findet bei beladenem Speicher bereits ein Wärmeübergang auf die Flüssigkeit im Bodenraum 37 statt. Obwohl die Flüssigkeit noch nicht in den Zwischenraum 34 am Außenumfang des Innenbehälters 3 verdrängt wurde, findet bereits ein geringer Wärmeübertrag von dem Latentwärmespeichermedium über die Flüssigkeit in den Bodenraum 37 und die Außenwand 33 des Außenbehälters auf die Kühlflüssigkeit in dem Kühlkreislauf 7 statt. Die Wärmeübergangsfläche wurde bereits vergrößert.

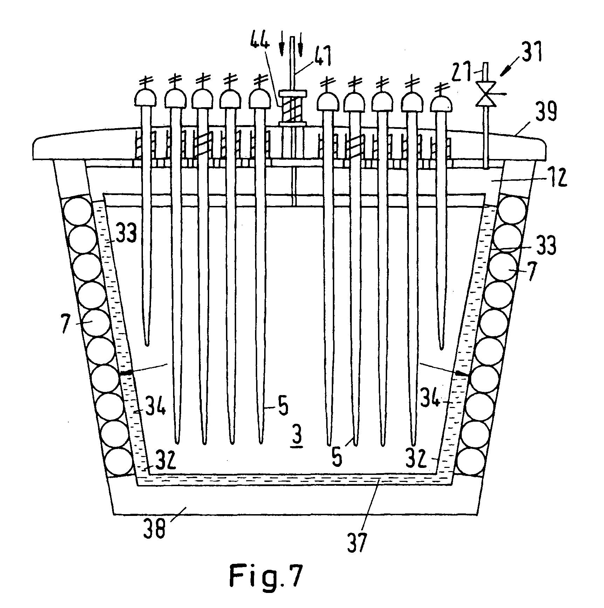

Durch weiteres Hinabbewegen des Innenbehälters 3 kann die Wärmeübergangsfläche nun kontinuierlich bis auf ihren Maximalwert gesteigert werden. Der Zustand des Maximalwertes ist in Fig. 7 dargestellt. Dort befindet sich der Innenbehälter 3 in der tiefstmöglichen Position. Die Flüssigkeit, die in der in Fig. 5 dargestellten Relativposition vollständig in dem Bodenraum 37 des Außenbehälters gesammelt war, wurde durch das Hinabbewegen des Innenbehälters 3 in den Zwischenraum 34 zwischen den Außenwänden 32, 33 verdrängt. Die Flüssigkeit in dem Zwischenraum 34 hat den maximal zulässigen Höchststand erreicht, wobei der Außenumfang des Innenbehälters 3 oder seine gesamte Höhe mit der Flüssigkeit in Kontakt ist, so dass über die gesamte Höhe ein Wärmeübertrag auf die Windungen des Kühlmittelkreislaufs 7 und das darin fließende Kühlmittel stattfinden kann.

Die oben in Fig. 5 bis Fig. 7 dargestellte Feder 44 sorgt für das Unterbrechen des Wärmeübergangs zwischen innerem und äußerem Behälter nach Wegfallen der nach unten weisenden Kraft auf Stange 41, d.h. der Innenbehälter 3 wird bei Wegfall der Kraft nach oben gedrückt und es besteht kein direkter Kontakt mehr zwischen dem Innenbehälter 3 und der Flüssigkeit in dem Bodenraum 37. Die Feder 44 dient daher der Sicherheit der Anordnung..

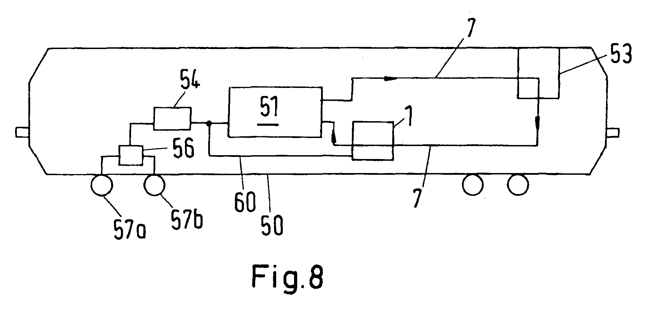

Fig. 8 zeigt eine Lokomotive 50, die von einer Brennkraftmaschine 51 angetrieben wird. Die Brennkraftmaschine 51 ist mit einem elektrischen Generator gekoppelt, der bei Betrieb der Brennkraftmaschine elektrischen Strom erzeugt, der über die elektrische Motorsteuerung 54 zu den Fahrmotoren 56 geleitet wird. Die Fahrmotoren 56 treiben die Räder 57a, 57b an. Beim Bremsen der Lokomotive 50 werden die Fahrmotoren 56 von den Rädern 57 mechanisch angetrieben und erzeugen im generatorischen Betrieb elektrischen Strom, der über die elektrische Motorsteuerung 54 über die elektrische Leitung 60 den nicht näher in Fig. 8 dargestellten Heizwiderständen oder einer anderen Heizeinrichtung eines Latentwärmespeichers 1 zugeführt wird. Bei dem Latentwärmespeicher 1 kann es sich z.B. um den in Fig. 1 bis 4 dargestellten Speicher, den in Fig. 5 bis Fig. 7 dargestellten Speicher oder um einen anderen Speicher handeln.

Die Brennkraftmaschine 51 wird während ihres Betriebes über den Kühlmittelkreislauf 7 gekühlt, wobei der Kühlmittelkreislauf 7 über einen Flüssigkeits-/Luftwärmetauscher 53 gekühlt wird.

Vor dem Start der Brennkraftmaschine 51 wird diese über das im Kühlmittelkreislauf 7 zirkulierende Kühlmittel vorgewärmt. Dazu fließt das Kühlmittel, z.B. wie oben beschrieben, durch den Latentwärmespeicher 1 und nimmt darin gespeicherte Wärme auf.

Im Folgenden wird ein Beispiel für das Aufladen und Entladen des Latentwärmespeichers, z.B. des in Fig. 1 bis 4 oder in Fig. 5 bis 7 beschriebenen Latentwärmespeichers beschrieben. Beim ersten Beladen des hier in diesem Ausführungsbeispiel als Latentwärmespeichermedium verwendeten Aluminiums wird zunächst sensible Wärme eingespeichert, d.h. die Temperatur des Aluminiums erhöht sich stetig mit dem Wärmeeintrag. Sobald jedoch die Phasenübergangstemperatur von ca. 660°C erreicht ist, beginnt das Aluminium zu schmelzen. Bis das gesamte vorhandene Aluminium in dem Latentwärmespeicher geschmolzen ist, erhöht sich die Temperatur nicht mehr wesentlich und allenfalls lokal geringfügig. Wird der Speicher weiter mit Wärme beladen, erhöht sich die Temperatur des flüssigen Aluminiums. Z.B. bei einer Temperatur von 750°C ist der Speicher auf seine Maximaltemperatur aufgeheizt und damit voll beladen.

Beim Entladen des Speichers wird zunächst die sensible Wärme im Temperaturbereich 750°C bis 660°C entzogen. Wird der Speicher weiter entladen, findet der umgekehrte Phasenübergang vom flüssigen in den festen Aggregatszustand statt. Danach kann der Speicher weiter entladen werden, indem wiederum sensible Wärme entnommen wird.

Ein Hochtemperatur-Aluminium-Latentwärmespeicher für ein Schienenfahrzeug, z.B. für eine Lokomotive, hat z.B. ein Speichervolumen von 100 I Aluminium. Dies entspricht etwa 270 kg. Damit lassen sich in der zuvor beschriebenen Weise bei Aufheizung bis zu 750°C 30 kWh Latentwärme speichern. Hinzu kommen 45 kWh sensible Wärme, die in den Temperaturbereichen unterhalb und oberhalb der Phasenübergangstemperatur bei 660°C eingelagert und entnommen werden können.

Bei dem in Fig. 5 bis 7 beschriebenen Speicher mit Innenbehälter und Außenbehälter, wobei außerhalb des Innenbehälters, aber innerhalb des Außenbehälters, ein Wärmeübergangsmedium vorhanden ist, kann die Verfahrensweise z.B. wie folgt sein. Dieses Wärmeübergangsmedium ist z.B. Zinn. Während des Beladens des Speichers kann der Innenbehälter z.B. in der in Fig. 5 dargestellten Relativposition zur Außenwand des Außenbehälters sein. Daher erwärmt sich zunächst lediglich das Latentwärmespeichermedium im Innenbehälter. Durch Wärmestrahlung wird sich auch das noch erstarrte Zinn erwärmen. Für das Entladen des Latentwärmespeichers wird der Innenbehälter in die in Fig. 6 dargestellte Position gebracht, so dass sich das Zinn vollständig verflüssigt, weil es eine wesentlich niedrigere Schmelztemperatur aufweist als das Aluminium im Innenbehälter, wenn dieses auf seine Phasenübergangstemperatur oder höher erwärmt wurde.

Im weiteren Betrieb wird das Zinn nur dann wieder erstarren, wenn auch das Latentwärmespeichermedium in dem Innenbehälter verhältnismäßig niedrige Temperaturen um 200-300°C erreicht.

## Patentansprüche

1. Anordnung, aufweisend einen Kühlmittelkreislauf (7) für eine Brennkraftmaschine (51), wobei
- die Brennkraftmaschine (51) thermisch mit mindestens einem Kühlmittelkreislauf (7) koppelbar ist, durch den ein Kühlmittel mit einer maximal zulässigen Kühlmitteltemperatur fließt,
- der Kühlmittelkreislauf (7) über zumindest einen Wärmetauscher (9) thermisch mit einem Latentwärmespeicher (1) gekoppelt oder zumindest zeitweise koppelbar ist,
- der Latentwärmespeicher (1) ein Latentwärmespeichermedium aufweist, das eine Phasenübergangstemperatur, die über der maximal zulässigen Kühlmitteltemperatur liegt, aufweist,
- das Latentwärmespeichermedium in einem Behälter (3) des Latentwärmespeichers (1) angeordnet ist,
- der Behälter (3) relativ zu dem zumindest einen Wärmetauscher (9) beweglich ist,
- der Behälter (3) und der Wärmetauscher (9) in zumindest zwei verschiedene Relativpositionen bringbar sind, in denen der Wärmeübergang von dem Latentwärmespeichermedium auf das Kühlmittel in dem Kühlmittelkreislauf (7) unterschiedlich groß ist.

2. Anordnung nach Anspruch 1, wobei das Latentwärmespeichermedium Aluminium ist, das bei Wärmeeintrag in den Speicher (1) auf dem Temperaturniveau der Phasenübergangstemperatur schmilzt bzw. bei Wärmaustrag wieder einen festen Aggregatszustand annimmt.

3. Anordnung nach einem der Ansprüche 1 - 2, wobei die Relativposition des Behälters (3) und des Wärmetauschers (9) kontinuierlich verstellbar ist, sodass der Wärmeübergang kontinuierlich auf beliebige Werte innerhalb eines Wertebereichs einstellbar ist.

4. Anordnung nach einem der Ansprüche 1 - 3, wobei eine Wand des Behälters (3) zumindest einen ersten Bereich (6) mit relativ großer Wärmeleitfähigkeit und zumindest einen zweiten Bereich (17) mit relativ kleiner Wärmeleitfähigkeit aufweist, wobei eine äußere Schale des Latentwärmespeichers (1), die die Wand umgibt, zumindest eine erste Zone (10) zum Übertragen von Wärme auf das Kühlmittel aufweist und zumindest eine zweite Zone (11) aufweist, die den Behälter (3) gegen Wärmeverluste dämmt, und wobei die zumindest zwei verschiedenen Relativpositionen durch Bewegen des Behälters (3) einstellbar sind, so dass in einer ersten Relativposition durch den ersten Bereich (6) und die erste Zone (10) ein Wärmestrom von dem Latentwärmespeichermedium auf das Kühlmittel fließt und sodass in einer zweiten Relativposition durch die erste Zone (10) ein schwächerer Wärmestrom von dem Latentwärmespeichermedium auf das Kühlmittel fließt.

5. Anordnung nach Anspruch 4, wobei die zumindest zwei verschiedenen Relativpositionen durch Drehen des Behälters (3) um eine Drehachse einstellbar sind, so dass in einer ersten Drehposition durch den ersten Bereich (6) und die erste Zone (10) ein Wärmestrom von dem Latentwärmespeichermedium auf das Kühlmittel fließt und sodass in einer zweiten Drehposition durch die erste Zone (10) ein schwächerer Wärmestrom von dem Latentwärmespeichermedium auf das Kühlmittel fließt.

6. Anordnung nach einem der Ansprüche 1 - 3, wobei der Behälter (3) ein innerer Behälter ist, der innerhalb eines äußeren Behälters beweglich angeordnet, wobei sich in einem Teilbereich (37) zwischen dem inneren Behälter (3) und einer Außenwand (33) des äußeren Behälters eine Flüssigkeit befindet, die bei Bewegung des inneren Behälters (3) in eine erste Richtung von dem inneren Behälter (3) in zumindest einen Hohlraum (34) zwischen dem inneren Behälter (3) und der Außenwand (33) des äußeren Behälters gedrängt wird, sodass die Flüssigkeit den Wärmestrom durch den nun zumindest teilweise gefüllten Hohlraum (34) auf das Kühlmittel verbessert.

7. Fahrzeug (50) mit einer Anordnung nach einem der vorhergehenden Ansprüche, wobei die Brennkraftmaschine Teil der Anordnung ist und ausgestaltet ist, beim Betrieb eine Traktion des Fahrzeuges zu bewirken.

8. Verfahren zum Vorwärmen einer Brennkraftmaschine (51), wobei
- die Brennkraftmaschine (51) vor einem Start der Brennkraftmaschine (51) durch Erwärmen von Kühlmittel in mindestens einem Kühlmittelkreislauf (7) erwärmt wird, durch den ein Kühlmittel mit einer maximal zulässigen Kühlmitteltemperatur fließt,
- das Kühlmittel in dem Kühlmittelkreislauf (7) mit Wärme aus einem Latentwärmespeicher (1) erwärmt wird,
- der Latentwärmespeicher (1) in einem Behälter (3) ein Latentwärmespeichermedium aufweist, das bei einer Phasenübergangstemperatur, die über der maximal zulässigen Kühlmitteltemperatur liegt, Wärme an das Kühlmittel abgibt,
- zum Steuern einer Stärke des Wärmestromes von dem Latentwärmespeichermedium auf das Kühlmittel der Behälter (3) relativ zu dem Kühlmittelkreislauf (7) bewegt wird, sodass sich aufgrund verschiedener Relativpositionen des Behälters (3) und des Kühlmittelkreislaufs (7) der Wärmeübergang ändert.

9. Verfahren nach Anspruch 7, wobei das Latentwärmespeichermedium Aluminium ist, das bei Wärmeeintrag in den Speicher (1) auf dem Temperaturniveau der Phasenübergangstemperatur schmilzt bzw. bei Wärmaustrag wieder einen festen Aggregatszustand annimmt.

## Claims

1. An assembly comprising a coolant circuit (7) for an internal combustion engine (51), wherein
- the internal combustion engine (51) is thermally couplable to at least one coolant circuit (7) through which a coolant with a maximum allowable coolant temperature flows,
- the coolant circuit (7) is thermally coupled via at least one heat exchanger (9) to a latent heat storage (1), or couplable thereto at least intermittently,
- the latent heat storage (1) comprises a latent heat storage medium, which has a phase transition temperature that is higher than the maximum allowable coolant temperature,
- the latent heat storage medium is arranged in a container (3) of the latent heat storage (1),
- the container (3) is movable relative to the at least one heat exchanger (9),
- the container (3) and the heat exchanger (9) are adapted to be brought into at least two different relative positions, in which the heat transmission from the latent heat storage medium to the coolant in the coolant circuit (7) is different.

2. The assembly according to claim 1, wherein the latent heat storage medium is aluminium, which melts when heat is introduced into the storage (1) at the temperature level of the phase transition temperature, respectively returns to a solid state when heat is removed.

3. The assembly according to one of the claims 1 - 2, wherein the relative position of the container (3) and the heat exchanger (9) is continuously adjustable, so that the heat transmission is continuously adjustable to any value within a range of values.

4. The assembly according to one of the claims 1 - 3, wherein a wall of the container (3) has at least one first area (6) with a relatively high heat conductivity and at least one second area (17) with a relatively low heat conductivity, wherein an outer shell of the latent heat storage (1), which surrounds the wall, has at least one region (10) for transmitting heat to the coolant and at least one second region (11), which insulates the container (3) against heat loss, and wherein the at least two different relative positions are adjustable by moving the container (3), so that in a first relative position, a heat flow flows through the first area (6) and the first region (10) from the latent heat storage medium to the coolant, and so that in a second relative position, a weaker heat flow flows through the first region (10) from the latent heat storage medium to the coolant.

5. The assembly according to claim 4, wherein the at least two different relative positions are adjustable by rotating the container (3) about a rotational axis, so that in a first rotational position, a heat flow flows through the first area (6) and the first region (10) from the latent heat storage medium to the coolant, and so that in a second rotational position, a weaker heat flow flows through the first region (10) from the latent heat storage medium to the coolant.

6. The assembly according to one of the claims 1 to 3, wherein the container (3) is an inner container, which is movably disposed within an outer container, wherein a liquid is located in a partial area (37) between the inner container (3) and an outer wall (33) of the outer container, which, when the inner container (3) is moved in a first direction, is pushed from the inner container (3) into at least one hollow space (34) between the inner container (3) and the outer wall (33) of the outer container, so that the liquid improves the heat flow through the now at least partially filled hollow space (34) to the coolant.

7. A vehicle (50) with an assembly according to one of the afore-mentioned claims, wherein the internal combustion engine is a part of the assembly and is designed to cause traction of the vehicle during operation.

8. A method for pre-heating an internal combustion engine (51), wherein
- the internal combustion engine (51) is heated prior to a start of the internal combustion engine (51) by heating up a coolant in at least one coolant circuit (7), through which a coolant with a maximum allowable coolant temperature flows,
- the coolant in the coolant circuit (7) is heated with heat from a latent heat storage (1),
- the latent heat storage (1) has a latent heat storage medium in a container (3), which releases heat to the coolant at a phase transition temperature that is higher than the maximum allowable coolant temperature,
- the container (3) is moved relative to the coolant circuit (7) for controlling an intensity of the heat flow from the latent heat storage medium to the coolant, so that the heat transmission changes as a result of different relative positions of the container (3) and the coolant circuit (7).

9. The method according to claim 7, wherein the latent heat storage medium is aluminium, which melts when heat is introduced into the storage (1) at the temperature level of the phase transition temperature, respectively returns to a solid state when heat is removed.

## Revendications

1. Ensemble, présentant un circuit réfrigérant (7) pour un moteur à combustion interne (51), sachant
- que le moteur à combustion interne (51) peut être couplé thermiquement à au moins un circuit réfrigérant (7), lequel est traversé par un agent réfrigérant présentant une température d'agent réfrigérant maximale tolérée,
- que le circuit réfrigérant (7) est couplé ou peut être couplé thermiquement au moins de manière temporaire, par l'intermédiaire d'au moins un échangeur de chaleur (9), à un accumulateur de chaleur latente (1),
- que l'accumulateur de chaleur latente (1) présente un milieu accumulateur de chaleur latente, qui présente une température de transition de phase, qui est supérieure à la température de l'agent réfrigérant maximale tolérée,
- que le milieu accumulateur de chaleur latente est disposé dans un réservoir (3) de l'accumulateur de chaleur latente (1),
- que le réservoir (3) peut être déplacé de manière relative par rapport à l'échangeur de chaleur (9) au moins au nombre de un,
- que le réservoir (3) et l'accumulateur de chaleur (9) peuvent être amenés dans au moins deux positions relatives différentes, dans lesquelles le transfert de chaleur du milieu accumulateur de chaleur latente à l'agent réfrigérant est d'importance différente dans le circuit réfrigérant (7).

2. Ensemble selon la revendication 1, sachant que le milieu accumulateur de chaleur latente est de l'aluminium, qui fond en cas d'apport de chaleur dans l'accumulateur (1) au niveau de température de la température de transition de phase ou qui reprend une forme solide en cas de dissipation de chaleur.

3. Ensemble selon l'une quelconque des revendications 1 à 2, sachant que la position relative du réservoir (3) et de l'échangeur de chaleur (9) peut être ajustée en continu de sorte que le transfert de chaleur peut être réglé en continu à des valeurs quelconques comprises dans une plage de valeurs.

4. Ensemble selon l'une quelconque des revendications 1 à 3, sachant qu'une paroi du réservoir (3) présente au moins une première zone (6) présentant une conductivité thermique relativement importante et au moins une deuxième zone (17) présentant une conductivité thermique relativement faible, sachant qu'une coque extérieure de l'accumulateur de chaleur latente (1), qui entoure la paroi, présente au moins une première zone (10) servant à transférer de la chaleur à l'agent réfrigérant et au moins une deuxième zone (11), qui permet une isolation du réservoir (3) pour empêcher toute perte de chaleur, et sachant que les deux positions relatives différentes ou plus peuvent être ajustées par le déplacement du réservoir (3) de sorte qu'un flux de chaleur circule depuis le milieu accumulateur de chaleur latente sur l'agent réfrigérant, dans une première position relative, à travers la première zone (6) et la première zone (10) et de sorte que dans une deuxième position relative, un flux de chaleur plus faible circule depuis l'agent accumulateur de chaleur latente sur l'agent réfrigérant à travers la première zone (10).

5. Ensemble selon la revendication 4, sachant que les deux positions relatives différentes ou plus peuvent être ajustées par la rotation du réservoir (3) autour d'un axe de rotation, de sorte que dans une première position de rotation, un flux de chaleur circule depuis le milieu accumulateur de chaleur sur l'agent réfrigérant à travers la première zone (6) et la première zone (10) et de sorte que dans une deuxième position de rotation, un flux de chaleur plus faible circule depuis le milieu accumulateur de chaleur latente sur l'agent réfrigérant à travers la première zone (10).

6. Ensemble selon l'une quelconque des revendications 1 à 3, sachant que le réservoir (3) est un réservoir intérieur, qui est disposé de manière à pouvoir se déplacer à l'intérieur d'un réservoir extérieur, sachant qu'un liquide se trouve dans une zone partielle (37) entre le réservoir intérieur (3) et une paroi extérieure (33) du réservoir extérieur, lequel liquide est refoulé, lors du déplacement du réservoir intérieur (3) dans une première direction, du réservoir intérieur (3) dans au moins un espace creux (34) entre le réservoir intérieur (3) et la paroi extérieure (33) du réservoir extérieur de sorte que le liquide améliore le flux de chaleur traversant l'espace creux (34) désormais rempli au moins en partie jusqu'à l'agent réfrigérant.

7. Véhicule (50) équipé d'un ensemble selon l'une quelconque des revendications précédentes, sachant que le moteur à combustion interne fait partie dudit ensemble et est configuré pour entraîner, lors de son fonctionnement, une traction du véhicule.

8. Procédé servant à préchauffer un moteur à combustion interne (51), sachant
- que le moteur à combustion interne (51) est chauffé avant tout démarrage du moteur à combustion interne (51) par le réchauffement de l'agent réfrigérant dans au moins un circuit réfrigérant (7), lequel est traversé par un agent réfrigérant présentant une température d'agent réfrigérant maximale tolérée,
- que l'agent réfrigérant est chauffé dans le circuit réfrigérant (7) à l'aide de la chaleur provenant de l'accumulateur de chaleur latente (1),
- que l'accumulateur de chaleur latente (1) présente, dans un réservoir (3), un milieu accumulateur de chaleur latente, qui fournit de la chaleur à l'agent réfrigérant à une température de transition de phase, qui est supérieure à la température d'agent réfrigérant maximale tolérée,
- que le réservoir (3) est déplacé par rapport au circuit réfrigérant (7) afin de commander une intensité du flux de chaleur depuis le milieu accumulateur de chaleur latente jusqu'à l'agent réfrigérant de sorte que le transfert de chaleur se modifie du fait des différentes positions relatives du réservoir (3) et du circuit réfrigérant (7).

9. Procédé selon la revendication 7, sachant que le milieu accumulateur de chaleur latente est de l'aluminium, qui fond en cas d'apport de chaleur dans l'accumulateur (1) au niveau de température de la température de transition de phase ou qui reprend un état solide en cas de dissipation de chaleur.
